# EUROPEAN PATENT APPLICATION

(11) **EP 4 737 314 A1**
(43) Date of publication of application: **06.05.2026**
(21) Application number: 25210885.7
(22) Date of filing: 23.10.2025
(51) Int. Cl.: B64D 11/02, B64D 11/04

(54) **FAUCET FOR AN AIRCRAFT CABIN**

(30) Priority: 29.10.2024 DE 102024131593
(71) Applicant: Airbus Operations GmbH, 21129 Hamburg (DE)
(72) Inventor: BORGWARDT, Simon, 21129 Hamburg (DE); VÖTTER, Axel, 21129 Hamburg (DE)
(74) Representative: LKGLOBAL Partnerschaftsgesellschaft mbB

(57) **Abstract**

The present invention relates to a faucet (2) for an aircraft cabin. The faucet (2) comprises at least one water inlet (4), a pressure regulator (8), a discharge arrangement (14) and a manual interaction element (16). The at least one water inlet (4) is configured to provide a water supply and is fluidly connected with the discharge arrangement (14) via the pressure regulator (8) forming a flow path from the water inlet (4) to the discharge arrangement (14). The pressure regulator (8) is configured to adjust a variable incoming pressure of the water supply to a modified pressure of the water supply to the discharge arrangement (14). The faucet (2) further comprises a vent valve (10) which is fluidly connected to the flow path and is configured to allow an exchange of gas and to close when water inside the flow path reaches the vent valve (10). Based on the modified pressure, the discharge arrangement (14) is configured to provide a predetermined amount of water for a user upon activation of the manual interaction element (6). The present invention also relates to a lavatory for an aircraft cabin, to a lavatory unit (220) for an aircraft cabin, to an aircraft cabin, to an aircraft (200) and to a method for providing water from a faucet (100).

## Description

### FIELD OF THE INVENTION

The present invention relates to providing water in an aircraft cabin to users, e.g. for washing hands. The present invention relates in particular to a faucet for an aircraft cabin, to a lavatory for an aircraft cabin, to a lavatory unit for an aircraft cabin, to an aircraft cabin, to an aircraft and to a method for providing water from a faucet.

### BACKGROUND OF THE INVENTION

In an aircraft, the water supply is usually pressurized using an onboard system designed to ensure that water flows to the galleys, lavatories and other areas where it is needed.

The water is carried in storage tanks, located in the lower part of the fuselage. In many aircraft, the water system is pressurized using the aircraft's pneumatic system, which supplies compressed air. The compressed air pressurizes the water tanks, pushing the water up through the pipes and out to the faucets and other outlets. Some aircraft also use electric pumps which can draw water from the storage tanks and force it through the plumbing system.

To supply water to passengers or crew members, faucets are provided. Faucets in an aircraft cabin are typically found in the lavatories or in the galleys. The faucets can be sensor-activated or have a mechanical, push-button mechanism to control the flow of water, which may automatically stop after a short period to keep water consumption as low as possible. However, it has been shown that the flowtime settings often have to be readjusted by service personnel.

### SUMMARY OF THE INVENTION

There may thus be a need to provide faucets for an aircraft cabin with more reliable flow time and flow rate of the discharged water.

The object of the present invention is solved by the subject-matter of the independent claims; further embodiments are incorporated in the dependent claims. It should be noted that the following described aspects of the invention apply also for the faucet for an aircraft cabin, for the lavatory for an aircraft cabin, for the lavatory unit for an aircraft cabin, for the aircraft cabin, for the aircraft and for the method for providing water from a faucet to a washbasin in an aircraft lavatory.

According to the present invention, a faucet for an aircraft cabin is provided. The faucet comprises at least one water inlet, a vent valve, a pressure regulator, a discharge arrangement and a manual interaction element. The at least one water inlet is configured to provide a water supply and is fluidly connected with the discharge arrangement via the pressure regulator forming a flow path from the water inlet to the discharge arrangement. The pressure regulator is configured to adjust a variable incoming pressure of the water supply to a modified pressure of the water supply to the discharge arrangement. The faucet also comprises a vent valve which is fluidly connected to the flow path and is configured to allow an exchange of gas and to close when water inside the flow path reaches the vent valve. Based on the modified pressure of the water supply, the discharge arrangement is configured to provide a predetermined amount of water for a user upon activation of the manual interaction element.

As an effect, specified flow time settings for the water can remain constant even with varying water supply pressures. By entering a pressure regulator into the faucet, it is possible to achieve a stable system pressure inside the faucet and so, a constant water pressure can be provided to the discharge unit and the flow rate of the outflowing water is independent from the incoming water supply pressure. Thus, a reliable flow time and flow rate of the discharged water can be achieved.

As a further advantage the calcification inside the faucet may be minimized as pressure transients are eliminated. It is known that pressure transients may induce crystal buildup (such as solid calcium carbonate (CaCO₃)) by causing solubility changes and enhancing nucleation. Thus, a constant water pressure inside the faucet also reduces or avoids the formation of CaCO₃, which then may precipitate out of the water and is commonly associated with the formation of scale or deposits in a water system.

The term "faucet" refers to a plumbing fixture that controls the release of water from a pipe or plumbing system. A faucet is for example used in the galleys and lavatories of an aircraft and may be installed in other areas where water is needed. The term "faucet" may also be referred to as a tap, spigot, valve, water plug, water cock, water tap or stopcock.

As an option the faucet may be referred to as a self-closing faucet. A self-closing faucet automatically shuts off the water flow after a set period of time or after a predetermined amount of water has been discharged without requiring the user to manually close it. As an advantage, water can be conserved, and hygiene may be improved because a user no longer has to touch the faucet after washing hands.

The term "water inlet" refers to an opening that lets water in, i.e. that allows water to enter the faucet and can also be referred to as supply inlet, water supply inlet, supply port, feed port, inlet port, water intake or water connection.

The term "vent valve" refers to a device used to control the release or admission of gas or air from the system. It allows excess gas or air to escape from the system or allows gas or air to enter, i.e. it allows an exchange of gas - also preventing the formation of a vacuum inside the system. In an aircraft faucet, the vent valve also prevents a large splash of air coming out of, for example, a spout, an aerator or another water dispensing opening, especially when the faucet is actuated for the first time. The vent valve can also be referred to as relief valve, exhaust valve, bleed valve, pressure release valve or air release valve.

The term "pressure regulator" refers to a device which may be used to control and maintain a steady or constant pressure level in a fluid system. It reduces for example the high pressure from a supply line to a lower, more manageable output pressure, or vice versa, ensuring that the pressure remains consistent, regardless of fluctuations at the input. For example, if the inlet pressure is higher than 1 bar, it may be regulated down to 1 bar. The pressure regulator can also be referred to as pressure regulating element.

The term "discharge arrangement" refers to an arrangement configured to control the discharge or release of water. The discharge arrangement also relates to a mechanism through which water exits the faucet into a sink or washbasin. The discharge arrangement may e.g. have a cylindrical shape and can comprise several components such as one or more valve(s) or a valve system, one or more water chamber(s), movable element(s), openings, inlets and outlets, sealings, rubber joints or spring members, and any other element necessary to provide a discharge of water, e.g. from a faucet. In a preferred example, the discharge arrangement comprises a movable element. The discharge arrangement can be configured to provide for a controlled release of water and may also be referred to as dispensing arrangement, discharge unit or release unit.

The term "manual interaction element" refers to the part of the faucet through which it can be operated by a user, i.e. which allows the faucet to be opened and the flow of water from the faucet to be started. A manual interaction element can be, for example, a push-button and may also be referred to as a handle, lever, knob, tap, button, manual activation element or manual interface.

The term "fluidly connected" refers to connecting fluid components of a system in a way that allows the continuous, uninterrupted flow of a fluid, such as water, between them. In other words, "fluidly connected" means that fluid-conveying elements are joined to allow fluid, such as water, to flow between different parts of a system. The term "fluidly connected" may also be referred to as being in fluid connection.

The term "flow path" refers to the route or passage that the water follows as it flows through the faucet. A flow path may also be referred to as flow channel, flow way, flow stream, pathway, flow route, fluid path, fluid circuit, conduit, course, fluid passage, flow passage or fluid stream.

The term "exchange of gas" refers to the entering and escaping of gas, such as air, from the inside to the outside and from the outside to the inside of a device such as a faucet.

The term "water supply" refers to a system that provides water. The water supply may also be referred to as water intake, water stream or water feed.

The term "incoming pressure" refers to the pressure of the incoming water or incoming water supply, i.e. the water pressure in the pipes leading up to the faucet before the water is released. The incoming pressure may further be referred to as inlet pressure, initial pressure, primary pressure or first pressure.

The term "modified pressure" refers to the pressure the water has when it leaves or has passed the pressure regulator and is forwarded to the discharge unit. The modified pressure can also be referred to as discharge pressure, output pressure, outlet pressure, secondary pressure or second pressure.

The term "predetermined amount" refers to a quantity or amount of water that has been established or decided in advance. This amount or quantity is set based on specific criteria and remains fixed until any adjustments are explicitly made. In an aircraft, carrying water means weight to be carried and therefore the amount of water per passenger is precisely calculated. The amount of water dispensed per faucet operation must therefore be limited to avoid any waste.

The term "activation" refers to the act of operating the manual interaction element to initiate the function of the faucet, i.e. to initiate a flow of water out of the faucet. The activation can involve turning a handle, pressing a button, pulling a lever, or pushing the manual interaction element.

According to an example, the faucet comprises two water inlets and in addition, a mixing unit. The two water inlets are fluidly connected with the mixing unit and the mixing unit is fluidly connected with the discharge arrangement via the pressure regulator forming a flow path from the water inlets to the discharge arrangement. The water inlets are configured to provide a first and second water supply of different temperatures, and the mixing unit is configured to provide a common water supply with adjustable temperature. The pressure regulator is configured to adjust a variable incoming pressure of the common water supply to a modified pressure of the common water supply to the discharge arrangement.

As a result, the discharged water not only has a constant flow rate and flow time but can also be adjusted to a desired temperature by the user. One water inlet can be for a hot water supply and the other water inlet can be for a cold water supply and so, depending on the mixing ratio of hot and cold water, individual temperatures can be set.

The term "mixing unit" refers to a device or system designed to combine two liquids such as water in a mixing chamber. That is, the water streams (for example in different amounts) are fed into the mixing chamber of the mixing unit and are mixed in it. The amount or quantity of each water stream may be adjusted by decreasing or increasing the corresponding inlet diameter(s).

The term "first and second water supply of different temperatures" refers to two water supplies, where one water supply has a first temperature, and the second water supply has a second temperature that is different from the first. For example, the first water supply is a hot water stream, and the second water supply is a cold water stream. Depending on the quantity of cold or hot water supplied, the temperature can be adjusted and a common water supply with adjustable temperature is provided.

The term "common water supply" refers to a water supply consisting of the combination of the first and second water supply; or, consisting only of one of the first or second water supply if only water from the first or second water supply is fed into the mixing chamber. This may be the case if only cold or only hot water is requested by a user and one of the water supply openings is completely closed by the mixing unit. The term "common water supply" refers to a water supply when the faucet comprises more than one, preferably two, water inlets and a mixing chamber, and is used in a similar, corresponding way to the term "water supply" when the faucet comprises only one water inlet.

According to an example, the discharge arrangement of the faucet comprises a discharge outlet and a closing unit acting on the discharge outlet, wherein the closing unit may be urged into an opening direction and a closing direction, respectively, with a force based on the modified pressure of the water supply.

The discharge unit may also be referred to as an open-close valve.

The term "discharge outlet" refers to an outlet for releasing or discharging the water from the faucet; it can be configured to regulate the water flow, such that it is completely shut off or an unrestricted discharge is allowed. The discharge outlet may also be referred to as discharge valve, exit valve, release valve, outflow valve or flow control valve.

The term "closing unit" refers to an element within the discharge unit that is configured to act on the discharge outlet in a closing direction so that the discharge outlet is closed and the water flow stops. The closing unit can also be urged in an opening direction so that the discharge outlet is open and water can flow out. The closing unit may be a movable element and can for example be a piston.

The term "closing direction" refers to a direction in which the discharge outlet is closed and does not let any water through. The closing direction is opposite to an opening direction.

The term "opening direction" refers to a direction in which the discharge outlet is opened such as to be in an opened state. The term opened state refers to a configuration of the discharge outlet in which it lets water through, i.e. the water can flow out of the faucet. The opened state may also be referred to as opening state and the closed state may also be referred to as closing state.

According to an example, the closing unit is a movable piston that is urged towards the closing direction by the modified pressure of the water supply and/or by a resilient element, such as a spring member.

The piston can move back and forth in the discharge arrangement which may, for example, be shaped as a cylinder. The movable piston can be urged in an opening direction by the force of the outflowing water and can also be urged back in a closing direction by the pressure of the water when a chamber behind the piston in the discharge unit is refilled. In addition, a resilient element, such as a spring may help urge the piston back in the closing direction. The spring force is a weaker force compared to the force of the water pressure. This has the effect that, when the system is depressurized and no water is in it, the discharge outlet can be closed by the spring force.

The term "movable piston" refers to a component that moves within the discharge arrangement. The piston can slide back and forth inside the discharge arrangement, driven by pressure from the water or optionally by a mechanical force such as by a spring or the like.

The term "resilient member" refers to a flexible component designed to deform under stress or pressure and return to its original shape once the stress or pressure thereupon is removed. The resilient member is typically made from materials with elastic properties, such as rubber, springs, or certain plastics.

According to an example, the faucet further comprises a time adjustment device arranged at the discharge arrangement, configured to regulate the flow time of the water out of the faucet.

In combination with the time adjustment a constant flow time can be achieved.

The term "time adjustment device" refers to a device that is configured to regulate the refilling of the chamber of the discharge arrangement (for example the chamber behind the closing unit), i.e. the more the inflow is limited, the longer it takes to fill the chamber and the longer is the flow time of the faucet. The adjustment may be realized via a fine thread.

The term "flow time" relates to the time span in which water flows from the faucet from the beginning to the end.

The term "flow rate" refers to the quantity of water that is passing through a cross-section of a pipe in a specific period of time. Thus, it is the volume of water per time the water has flowed.

The term "arranged at" may also be referred to as connected with.

According to an example, the vent valve is fluidly connected to the flow path after the pressure regulator in a downstream position.

As an option, in an example of the faucet, the vent valve is fluidly connected to the flow path between the mixing unit and the discharge arrangement.

As a further option, the vent valve is fluidly connected to the flow path after the discharge arrangement.

According to an example, the manual interaction element further comprises a double acting plunger configured to act on the discharge arrangement performing two actuations simultaneously, wherein, preferably, the two actuations are a pressure release actuation and a discharge actuation.

As an effect, when both actuations are operated simultaneously, the discharge arrangement is opened and a water flow is started by a user activating, i.e. for example pressing, the manual interaction element.

The term "double acting plunger" refers to a plunger having two actuators, for example pistons, that are actuated or moved simultaneously when the plunger is actuated or pressed. The double acting plunger can act on the discharge unit whereby two actuations are carried out and the discharge unit is opened. Hence, the discharge arrangement may be controlled by the double acting plunger.

The term "pressure release actuation" refers to releasing pressure from the discharge unit.

The term "discharge actuation" refers to generating a pressure shot to a frontal surface of the closing unit, for example to a frontal surface of a movable piston. This causes the piston to move in an opening direction.

The discharge arrangement could also be operated electromagnetically by a solenoid, i.e. the discharge arrangement may be actively opened and actively closed (e.g. after 10 sec, or any other period of time).

According to an example, the faucet further comprises a spout, the spout preferably comprising an aerator, fluidly connected with the discharge outlet of the discharge arrangement and configured to provide for a controlled water flow out of the faucet.

The term "spout" refers to an outlet for water in the faucet directing water from the plumbing system to a sink or basin. The spout can have various shapes and designs, such as straight, gooseneck, or pull-down spouts, and can also be referred to as nozzle, outlet, faucet discharge, pouring arm, water outlet or dispenser.

The term "aerator" refers to a small device typically attached to the end of the spout and may for example be a small mesh screen. Thus, it is a component that can be added to the spout to improve water flow and reduce splashing.

According to the present invention, a lavatory for an aircraft cabin is provided. The lavatory comprises at least one washbasin and at least one faucet. The at least one faucet is provided as a faucet according to one of the preceding examples.

The term "lavatory" refers to a place or an area equipped with a washbasin and a faucet where passengers can e.g. wash their hands.

The term "washbasin" refers to a part arranged below the faucet where water collects, and may for example be bowl-shaped. The washbasin may also be referred to as sink, basin or bowl.

According to the present invention, a lavatory unit for an aircraft cabin is provided. The lavatory unit comprises an enclosure and at least one lavatory as explained above.

The term "lavatory unit" refers to a part inside an aircraft cabin that provides, inside an enclosure, a space with one or more lavatories with faucet(s) and washbasin(s). The lavatory unit may optionally also comprise on or more toilets. The lavatory unit can also be referred to as lavatory monument.

The term "enclosure" refers to the physical structure enclosing or encapsulating a space to provide a sanitary function and to provide a separation from its environment. The enclosure may also be referred to as housing.

According to the present invention there is further provided an aircraft cabin. The aircraft cabin comprises a cabin space and at least one lavatory unit according to the invention arranged within the cabin space. As an option, the aircraft cabin comprises at least one lavatory or both, at least one lavatory and at least one lavatory unit according to the present invention, arranged within the cabin space.

According to the present invention, also an aircraft is provided. The aircraft comprises a fuselage with a cabin space. The aircraft further comprises at least one lavatory unit and/or at least one lavatory according to the present invention, arranged within the cabin space.

According to the present invention, also a method is presented for providing water from a faucet to a washbasin in an aircraft lavatory to a user. The method comprises the following steps:
Providing at least one water supply to a water inlet of the faucet, wherein the water inlet is fluidly connected with a discharge arrangement via a pressure regulator forming a flow path from the water inlet to the discharge arrangement.

Adjusting a variable incoming pressure of the water supply to a modified pressure of the water supply by the pressure regulator and providing the water supply with the modified pressure to the discharge arrangement.

Activating a manual interaction element to provide a predetermined amount of water by the discharge arrangement upon activation of the manual interaction element.

In the method, a e.g. variable incoming pressure of a water supply is adjusted to a modified pressure of the water supply by a pressure regulator arranged within the faucet and the water flow can be stopped with a predetermined time delay.

According to an aspect, the pressure regulation takes place inside the faucet which makes the faucet independent from incoming water supply pressure. The flow time settings of dispensed water in such a supply-pressure-independent faucet does not have to be constantly readjusted. Since supply pressure fluctuations are almost inevitable in aircraft, such faucet is particularly valuable for use in aircraft cabins. In addition, it is more pleasant for passengers if the flow time in the lavatories remains reliably constant and so, an excessive activation of the faucet's water flow is avoided, which also leads to water savings. A stable system pressure in the faucet further helps to reduce calcification or scaling, as it is known that pressure fluctuations may induce deposits.

### BRIEF DESCRIPTION OF THE DRAWINGS

Exemplary embodiments of the invention will be described hereafter with reference to the following drawings:
Fig. 1 and Fig. 2 are schematic diagrams of two examples of a faucet for an aircraft cabin.
Fig. 3 schematically shows an example of a faucet for an aircraft cabin in a plan view.
Fig. 4 schematically shows a side view of a lavatory of an aircraft comprising a washbasin and a faucet.
Fig. 5 shows basic steps of an example of a method for providing water from a faucet to a washbasin in an aircraft lavatory.
Fig. 6 shows a cross section of an example of an aircraft with a lavatory unit provided in a cabin space.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

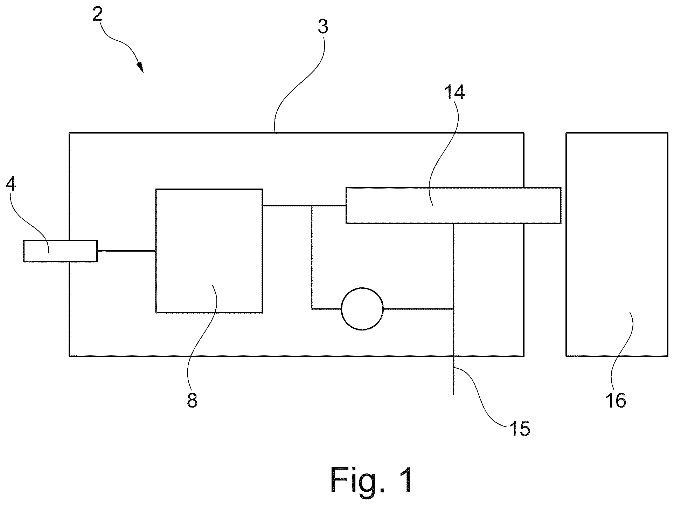

Fig. 1 is a schematic diagram of an example of a faucet 2 for an aircraft cabin. The faucet 2 has a housing 3 and comprises a water inlet 4 which is fluidly connected with a discharge arrangement 14 via a pressure regulator 8 and thus, a flow path is formed from the water inlet 4 to the discharge arrangement 14. A vent valve 10 is fluidly connected to the flow path between the pressure regulator 8 and the discharge element 14, preventing, for example, a splash of air coming out of the faucet spout when the faucet is actuated for the first time. A manual interaction element 16 in the form of a push-button is shown on the right, through which the faucet can be operated. When the push-button is pressed, it acts on the discharge arrangement 14 and opens the water flow. It is possible that actuator(s) such as one or more pistons (not shown) of the manual interaction element 16 act on the discharge arrangement 14 such that it opens, and water flows out of the faucet. The pressure regulator 8 adjusts the incoming pressure of the water (i.e. the pressure as it is at the inlet) to a modified pressure of the water before it enters the discharge arrangement 14.

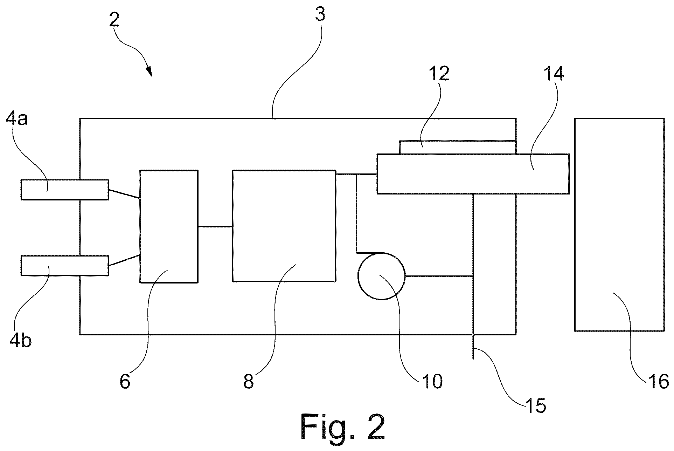

Fig. 2 is schematic diagram of another example of a faucet 2 for an aircraft cabin. In this example, the faucet 2 comprises a housing 3 and two water inlets 4a, 4b. One water inlet 4a is for hot water, i.e. it can be connected to a hot water pipe and provides for a first water supply, and the other water inlet 4b is for cold water, i.e. it can be connected to a cold water pipe and provides for a second water supply. The faucet 2 further comprises a mixing unit 6 with a mixing chamber, which mixing unit 6 is fluidly connected with both water inlets 4a, 4b. By operating the manual interaction element 16, for example by turning, the mixing unit 6 may be adjusted in that a diameter of the inlet(s) of the hot or cold water pipe, respectively, into the mixing chamber is changed so that a desired temperature can be set. Thus, the two incoming water streams are mixed in the mixing unit 6, providing for a common water supply with an adjustable temperature. The mixing unit 6 is fluidly connected with the discharge arrangement 14 via the pressure regulator 8 forming a flow path from the water inlets 4a, 4b to the discharge arrangement 14. The pressure regulator 8 adjusts different pressures (static and transient) of the two water inlets 4a, 4b to a stable system pressure inside the faucet 2. As in the preceding example, a vent valve 10 is arranged in fluid connection between pressure regulator 8 and discharge unit 14. The faucet 2 is further provided with a time adjustment device 12, arranged at the discharge arrangement 14. The time adjustment device 12 is configured to be regulated such that a desired flow time can be set. As in the diagram of Fig. 1, a manual interaction element 16 is shown which acts, e.g. by pressing, on the discharge arrangement 14 to start the water flow out of the faucet.

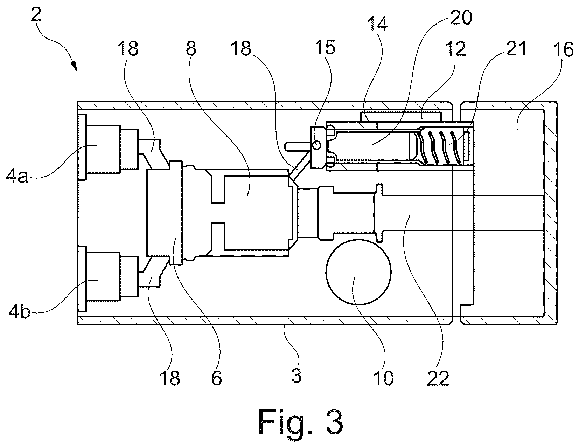

Fig. 3 schematically shows an example of a faucet 2 for an aircraft cabin in a plan view. Two water inlets 4a, 4b are provided, one water inlet 4a for the connection to a hot water pipe, and the other water inlet 4b for the connection to a cold water pipe. The inlets 4a, 4b are in fluid connection 18 with a mixing unit 6, and the mixing unit 6 is in fluid connection 18 with the discharge arrangement 14 via a pressure regulator 8. That is, as explained in connection with Fig. 2, adjustable amounts of the incoming water streams enter the mixing unit 6 and are mixed therein to provide a common water supply. The common water supply with a variable incoming pressure enters the pressure regulator 8 in which the pressure is adjusted to a modified pressure. Thus, the pressure regulator 8 adjusts different pressures (static and transient) of the two water inlets 4a, 4b to a stable system pressure inside the faucet 2. Thereafter, the common water supply can flow to the discharge arrangement 14. The discharge arrangement 14 comprises a discharge outlet 15 shown on the left ("right" and "left" refer to the plan view shown here) and a closing element 20 (shown here as a movable piston) which is in a closing state, i.e. moved to the left. Behind the piston (on the right) is a chamber 21 which has refilled with water as the piston has moved back to its closing position. The speed at which the piston moves back to the closed position depends on the setting of the time adjustment device 12. There is also a weak spring shown "around" the chamber 21.

The discharge arrangement 14 is opened by actuation (pressing the push-button) and allows the water to flow out of a spout (not shown in the plan view) for a time defined by the time adjustment device 12. In an example, the push-button 16 is configured to act on the discharge arrangement 14 such that when the push-button 16 is pressed, two actuations may be performed simultaneously, for example via two pistons. One actuation releases the pressure from the chamber 21 behind the piston (right side) and at the same time a discharge actuation shoots a pressure surge directly on the frontal surface of the piston 20. This causes the piston 20 to move to the right and to open a main flow of the water to the outlet 15. As long as the push-button is 16 continuously pressed, the water flows continuously. Once the actuations are closed, the pressure in a rear chamber 21 slowly builds up due to the regulation of the time adjustment device 12 and the piston moves back towards its starting position and closes the flow to the outlet 15 at the end. As an option, the piston may be closed by a spring force when the system is depressurized. Thus, the discharge arrangement 14 described may be a combination of three functional elements in which the "main piston", i.e. the closing element 20, is controlled by other elements, such as two actuation pistons, accordingly.

The faucet 2 shown in Fig. 3 further comprises a vent valve 10, fluidly connected to the flow path at any point. An operating element 22 of the manual interaction element 16 (the push button) acts on the mixing unit 6 such that, by turning the manual interaction element 16 (push button) by a user, the inlet openings' diameter of the two water flows (hot and cold water) into the mixing chamber 6 can be changed to set a desired temperature of the common water supply.

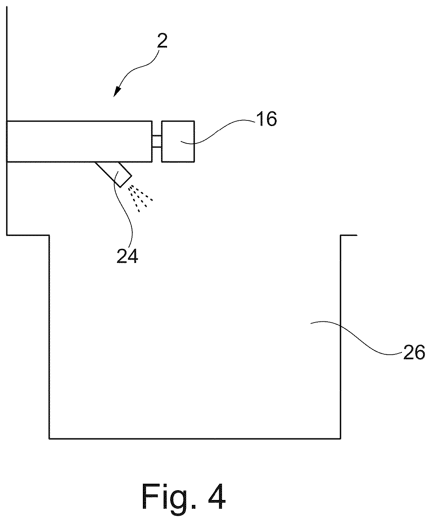

Fig. 4 schematically shows a side view of a lavatory of an aircraft cabin comprising a washbasin 26 and a faucet 2. The faucet 2 is mounted to a wall and is arranged directly above the washbasin 26. The faucet 2 has a manual interaction element 16 in the form of a push-button and a spout 24 comprising an aerator.

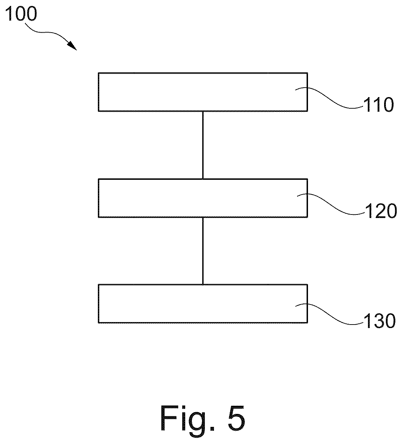

Fig. 5 shows basic steps of an example of a method 100 for providing water from a faucet to a washbasin in an aircraft lavatory. The method 100 comprises the following steps: In a first step 110, at least one water supply to a water inlet of the faucet is provided, wherein the water inlet is fluidly connected with a discharge arrangement via a pressure regulator forming a flow path from the water inlet to the discharge arrangement. In a second step 120, a variable incoming pressure of the water supply is adjusted to a modified pressure of the water supply by the pressure regulator and the water supply with the modified pressure is provided to the discharge arrangement. In a third step 130, a manual interaction element is activated to start a water flow and to provide, based on the modified pressure of the water supply, a predetermined amount of water by the discharge arrangement to the user.

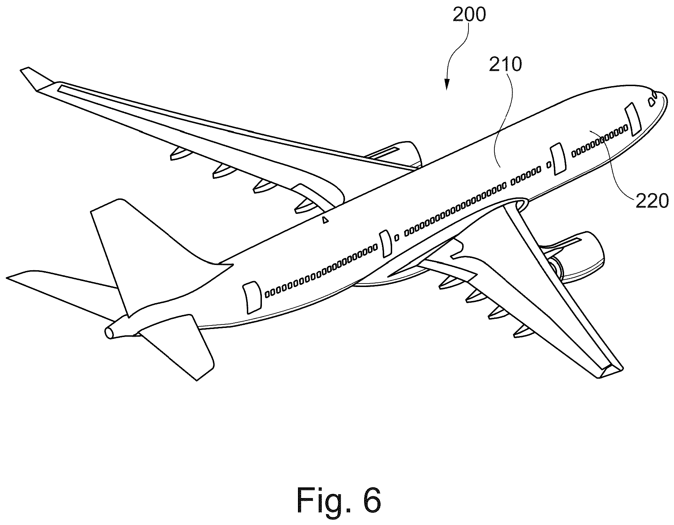

Fig. 6 shows a cross section of an example of an aircraft 200 with an aircraft fuselage and a lavatory unit 220 provided in a cabin space 210 within the fuselage.

It must be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

### Reference signs:

- 2: faucet
- 3: housing
- 4: water inlet
- 4a: water inlet for hot water
- 4b: water inlet for cold water
- 6: mixing unit
- 8: pressure regulator
- 10: vent valve
- 12: time adjustment device
- 14: discharge arrangement
- 15: discharge outlet
- 16: manual interaction element (push button)
- 18: fluid connection
- 20: closing unit (piston)
- 21: chamber
- 22: operating element
- 24: spout (+aerator)
- 26: washbasin
- 100: method for providing water from a faucet
- 200: aircraft
- 210: cabin space
- 220: lavatory unit

## Claims

1. A faucet (2) for an aircraft cabin, the faucet comprising:
- at least one water inlet (4);
- a vent valve (10);
- a pressure regulator (8);
- a discharge arrangement (14); and
- a manual interaction element (16);
wherein the at least one water inlet is fluidly connected with the discharge arrangement via the pressure regulator forming a flow path from the water inlet to the discharge arrangement;
wherein the vent valve is fluidly connected to the flow path and is configured to allow an exchange of gas and to close when water inside the flow path reaches the vent valve;
wherein the at least one water inlet is configured to provide a water supply;
wherein the pressure regulator is configured to adjust a variable incoming pressure of the water supply to a modified pressure of the water supply to the discharge arrangement; and
wherein, based on the modified pressure of the water supply, the discharge arrangement is configured to provide a predetermined amount of water for a user upon activation of the manual interaction element.

2. Faucet according to claim 1, comprising:
- two water inlets (4a, 4b); and further comprising
- a mixing unit (6);
wherein the water inlets are fluidly connected with the mixing unit and the mixing unit is fluidly connected with the discharge arrangement via the pressure regulator forming a flow path from the water inlets to the discharge arrangement;
wherein the water inlets are configured to provide a first and second water supply of different temperatures;
wherein the mixing unit is configured to provide a common water supply with adjustable temperature; and
wherein the pressure regulator is configured to adjust a variable incoming pressure of the common water supply to a modified pressure of the common water supply to the discharge arrangement.

3. Faucet according to claim 1 or 2, wherein the discharge arrangement comprises a discharge outlet (15), and a closing unit (20) acting on the discharge outlet,
wherein the closing unit may be urged into an opening direction and a closing direction, respectively, with a force based on the modified pressure of the water supply.

4. Faucet according to claim 3, wherein the closing unit is a movable piston that is urged towards the closing direction by the modified pressure of the water supply and/or by a resilient element, such as a spring member.

5. Faucet according to one of the preceding claims, the faucet further comprising a time adjustment device (12) arranged at the discharge arrangement, configured to regulate the flow time of the water out of the faucet.

6. Faucet according to one of the preceding claims, wherein the vent valve is fluidly connected to the flow path after the pressure regulator in a downstream position.

7. Faucet according to one of the preceding claims, wherein the manual interaction element further comprises a double acting plunger configured to act on the discharge arrangement performing two actuations simultaneously, wherein, preferably, the two actuations are a pressure release actuation and a discharge actuation.

8. Faucet according to one of the preceding claims, wherein the faucet further comprises a spout (24), preferably comprising an aerator, fluidly connected with the outlet of the discharge arrangement and configured to provide for a controlled water flow out of the faucet.

9. A lavatory for an aircraft cabin, the lavatory comprising:
- at least one washbasin (26); and
- at least one faucet according to one of claims 1 to 8.

10. A lavatory unit for an aircraft cabin, the lavatory unit comprising:
- an enclosure; and
- at least one lavatory according to claim 9.

11. An aircraft cabin, the aircraft cabin comprising:
- a cabin space; and
- at least one lavatory unit according to claim 10 and/or at least one lavatory according to claim 9, arranged within the cabin space.

12. An aircraft (200) comprising:
- a fuselage with a cabin space (210); and
- at least one lavatory unit (220) according to claim 10 and/or at least one lavatory according to claim 9, arranged within the cabin space.

13. A method (100) for providing water from a faucet to a washbasin in an aircraft lavatory to a user, comprising the steps:
- providing (110) at least one water supply to a water inlet of the faucet, wherein the water inlet is fluidly connected with a discharge arrangement via a pressure regulator forming a flow path from the water inlet to the discharge arrangement;
- adjusting (120) a variable incoming pressure of the water supply to a modified pressure of the water supply by the pressure regulator and providing the water supply with the modified pressure to the discharge arrangement; and
- activating (130) a manual interaction element to start a water flow and to provide, based on the modified pressure of the water supply, a predetermined amount of water by the discharge arrangement to the user.
